# EUROPEAN PATENT SPECIFICATION

(11) **EP 0 473 057 B1**
(45) Date of publication and mention of the grant of the patent: **20.07.1994**
(21) Application number: 91114020.0
(22) Date of filing: 21.08.1991
(51) Int. Cl.: F24D 3/14

(54) **Heating element for floor heating**
Heizelement für eine Fussbodenheizung
Elément chauffant pour un chauffage du sol

(30) Priority: 31.08.1990 FI 904293
(43) Date of publication of application: 04.03.1992
(73) Proprietor: NESTE OY, FIN-02150 Espoo (FI); OY UPONOR AB, 15561 Nastola (FI)
(72) Inventor: Lehto, Jorma, SF-38210 Vammala (FI); Vanhanen, Erkki, SF-38200 Vammala (FI); Hietanen, Juha, SF-15540 Villähde (FI)
(74) Representative: Tiedtke, Harro, Dipl.-Ing.

(56) References cited:
- DE-A- 2 928 893
- DE-A- 3 326 291
- DE-B- 2 759 770
- DE-U- 8 701 179

## Description

The invention concerns a heating element for floor heating, comprising an insulation plate made of a heat-insulation material and to be installed on a base as well as pipe fastenings supported on the insulation plate and provided with installation slots for the heating pipes to keep the heating pipes in their positions when the top layer to be applied onto the insulation plate and the heating pipes is cast.

Floor heating in buildings is, as a rule, accomplished so that the floor is heat-insulated by providing the base, such as a concrete slab or equivalent, with purposeful thermal insulation. Onto the thermal insulation, heating pipes are installed in the desired way, being usually fixed or supported on the insulation plates. Hereupon the concrete layer is cast onto the insulation layer so that the heating pipes remain inside the concrete layer that is cast.

A problem in the arrangement of floor heating has usually been how to keep the heating pipes purposefully in their position during the casting of the concrete layer. In prior art, the pipes were attached to the insulation plates, e.g., by means of various separate pieces individually, which was a very inconvenient and slow step of work.

Later, to make this working step quicker, different solutions have been developed.

In the German Patent Publication DE-A-3 326 291 there is shown a heating element for floor heating, comprising fastening rails which can be fixed on an insulation plate. the fastening rails are provided with straight grooves, pipe fastenings supported on the fastening rails and provided with installation slots for heating pipes arranged rectangular to the fastening rails to keep the heating pipes in their position when the top layer is applied onto the fastening rail. The pipe fastenings have flange parts which correspond to the shape of the grooves of the fastening rails, so that the pipe fastening can be pushed into the grooves and shifted in the grooves to a desired location. Heating pipes can be passed through the installation slots of the pipe fastenings. In the solution of the German Patent DE 3543688 a film of, e.g., plastic is fixed to the surface of the insulation plate, to which the shaped fastenings for the heating pipes are again fixed. When the concrete layer is cast, said fastenings, together with the heating pipes, remain inside the concrete. By means of this solution, the installation of the heating pipes can be made more quickly, but some of the drawbacks are that the installation and fixing of the fastenings are time-consuming and that the locations of the fastenings cannot be changed or corrected readily after installation into the insulation plate.

A further similar solution has been described in prior art in the German Patent DE 3318694. In the solution described in said publication, a film or surface layer of plastic or equivalent is also installed onto the face of the insulation plate. Into this film or layer, crosswise recesses or projections have been formed, which divide the film face into squares defined by said recesses or projections. The fastenings for the heating pipes are supposed to be installed in these squares. Some of the drawbacks of the solution are that the locations of the fastenings on the insulation plate cannot be chosen freely and that the directions of the pipe installation slots in the fastenings are fully determined by the directions of the recesses or equivalent.

A further prior-art solution is described in the Published German Patent Application No. DE 3730144. In this solution, a particular installation plate is fitted onto the insulation plate, which installation plate is provided with a number of cylindrical elevations, between which the heating pipes are supposed to be installed and fixed. One of the drawbacks of this solution is that the installation plate must have a large number of elevations in order that the heating pipes could be installed in the desired location. Thus, the loss of material may become considerable. It is a further drawback that the spacing of the elevations is invariable, which again has the consequence that on each installation plate it is possible to use one pipe size only, or at least the variation in the pipe size must not be large.

Additionally, common drawbacks of the prior-art solutions mentioned above include that the heating element consists of several components, i.e. of the insulation plate itself, of the layer or installation plate fitted on the insulation plate, and of the pipe fastenings. Thus, the solutions are quite costly.

The object of the present invention is to develop a heating element by whose means the drawbacks of the prior-art solutions are avoided and by whose means the installation of the heating pipes is improved and facilitated further.

According to the invention this object is achieved by the features of claim 1.

Further advantageous features of the invention are indicated in the subclaims.

Of the advantages achievable by means of the invention, it can be mentioned, e.g., that the number of components required is lower than in prior art. This results in reduced cost. In the solution of the invention, the location of the pipe fastenings is to such an extent free that the places and directions of installation of the heating pipes can be chosen freely. In the invention, the same pipe fastenings can be used for several pipe sizes. The further advantages and characteristic features of the invention come out from the following detailed description of the invention.

In the following, the invention will be described in detail with reference to the figures in the accompanying drawing.

Figure 1 is a schematic perspective view of a floor heating element in accordance with the invention.

Figure 2 shows one pipe fastening to be fitted into the element.

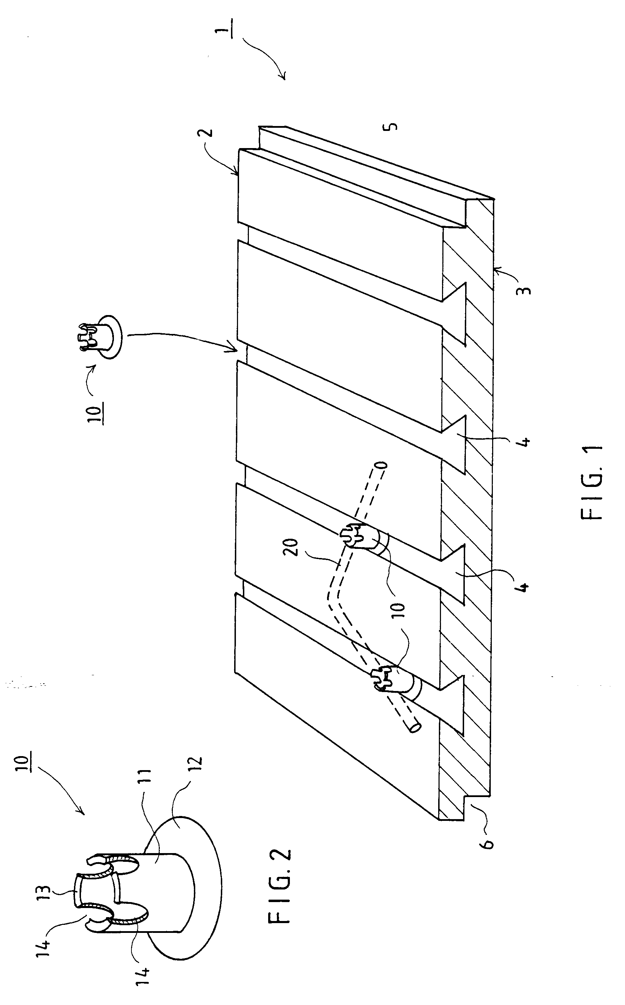

In the figures in the drawing, the insulation plate is denoted generally with the reference numeral 1. The material of the insulation plate 1 is preferably cellular plastic or equivalent and, if necessary, the bottom face 3 of the insulation plate, which is placed against a concrete slab (not shown) or any other base, may be elasticized. Into the insulation plate 1, form-cut grooves 4 have been formed, which extend from the top face 2 into the insulation material and which extend across the width of the insulation plate 1. In Fig. 1 it is shown that the grooves 4 are dovetail grooves, but the shape of the grooves may be any other groove shape whatsoever that is provided with back-off cutting. In a conventional way, each end of the insulation plate 1 is provided with jointly operative joint parts 5,6, by whose means insulation plates can be fitted together as larger units.

In the figures, the pipe fastenings are denoted generally with the reference numeral 10. A pipe fastening 10 comprises a preferably cylindrical body part 11, into whose top portion 13 installation slots 14 have been formed for heating pipes 20. At the opposite end of the body part 11, i.e. at the bottom end, a flange part 12 or an equivalent part has been formed, whose shape corresponds to the shape of the dovetail grooves 4 or equivalent form-cut grooves formed into the insulation plate 1. The pipe fastenings 10 are fitted into the grooves 4 in the insulation plate 1 so that the flange part 12 or equivalent is pushed into said groove, whereby the pipe fastening 10 cannot rise out of the groove. The installation slots 14 for the pipes remain above the top face 2 of the insulation plate. In one fastening 10, there may be installation slots 14 of two different sizes for different pipe sizes. The pipe fastenings 10 can be shifted in the grooves 4 to the desired locations, and, moreover, the flange part 12 is preferably circular in order that the pipe fastening 10 could be rotated, whereby the directions of running of the heating pipes 20 can be chosen fully freely.

Thus, a heating element of the invention consists of an insulation plate 1 provided with form-cut grooves 4 and of pipe fastenings 10 which are fitted in the grooves 4 and which are provided with installation slots 14 for heating pipes 20. The pipe fastenings 10 can be displaced in the grooves 4 fully freely to the desired locations, and, moreover, the pipe fastenings 10 can be rotated in the grooves 4, for which reason the locations and the directions of running of the heating pipes 20 can be chosen in the desired way. Further, onto the insulation plate 1, a top layer of a material that can be cast will be applied, the heating pipes 20 and the pipe fastenings 10 remaining inside said top layer. During the casting of the top layer, the heating pipes 20 remain reliably in their place in the pipe fastenings 10. The top layer to be cast is most commonly concrete, but other materials that can be cast, such as hardening fibrous finishing materials, various mixes and equivalent, can also be used in connection with the invention.

## Claims

1. Heating element for floor heating, comprising an insulation plate (1) made of a heat-insulation material and to be installed on a base as well as pipe fastenings (10) supported on the insulation plate (1) and provided with installation slots (14) for the heating pipes (20) to keep the heating pipes (20) in their positions when the top layer to be applied onto insulation plate (1) and the heating pipes (20) is cast, characterized in that the insulation plate (1) has form-cut grooves (4) provided with back-off cutting and that, onto their lower end the pipe fastenings (10) have flange parts (12) which correspond to the shape of the grooves (4) and which can be pushed into the grooves (4), so that the pipe fastenings (10) can be shifted in the grooves (4) to the desired locations for the purpose of installation of the heating pipes (20) in the installation slots (14) and in that the pipe fastenings (10) are shaped so as to permit rotation of the pipe fastenings (10) after they have been fitted into the grooves (4).

2. Heating element as claimed in claim 1, characterized in that the grooves (4) formed in the insulation plate (1) are dovetail grooves.

3. Heating element as claimed in any of the preceding claims, characterized in that crosswise installation slots (14) have been formed in the top end (13) of the pipe fastenings (10).

4. Heating element as claimed in any of the preceding claims, characterized in that the installation slots (14) have been formed for at least two pipe sizes.

## Patentansprüche

1. Heizelement für eine Fußbodenheizung, mit einer auf eine Basis zu installierenden Isolationsplatte (1) aus einem wärmedämmenden Material sowie auf der Isolationsplatte (1) gelagerten Rohrhalterungen (10) mit Installationsschlitzen (14) für die Heizrohre (20), so daß die Heizrohre (20) in ihrer Lage gehalten werden, wenn die auf die Isolationsplatte (1) und die Heizrohre (20) aufzutragende obere Schicht gegossen wird,
dadurch gekennzeichnet, daß die Isolationsplatte (1) formgeschnittene Rillen (4) mit einer Hinterschneidung und daß die Rohrhalterungen (10) an ihrem unteren Ende Flanschteile (12) haben, die mit der Form der Rillen (4) übereinstimmen und in die Rillen (4) geschoben werden können, so daß die Rohrhalterungen (10) in den Rillen (4) an die gewünschten Stellen verstellt werden können, um die Heizrohre (20) in den Installationsschlitzen (14) zu installieren, und daß die Rohrhalterungen (10) derart geformt sind, daß eine Drehung der Rohrhalterungen (10) gestattet ist, nachdem sie in die Rillen (4) eingebaut worden sind.

2. Heizelement nach Anspruch 1, dadurch gekennzeichnet, daß die in der Isolationsplatte (1) geformten Rillen (4) Schwalbenschwanzrillen sind.

3. Heizelemente nach einem beliebigen der vorstehenden Ansprüche, dadurch gekennzeichnet, daß über Kreuz liegende Installationsschlitze (14) in dem oberen Ende (13) der Rohrhalterungen (10) geformt worden sind.

4. Heizelemente nach einem beliebigen der vorstehenden Ansprüche, dadurch gekennzeichnet, daß die Installationsschlitze (14) für zumindest zwei Rohrgrößen geformt worden sind.

## Revendications

1. Elément chauffant pour le chauffage du sol, comprenant une plaque isolante (1) fabriquée à partir d'un isolant thermique et destinée à être installée sur une base, ainsi que des moyens de fixation de tuyau (10) supportés par la plaque isolante (1) et pourvus d'encoches (14) d'installation de tuyaux chauffants (20) pour maintenir les tuyaux en position lors de la coulée de la couche supérieure devant être appliquée sur la plaque isolante (1) et sur les tuyaux chauffants (20), caractérisé en ce que la plaque isolante (1) comporte des rainures façonnées détalonnées (4), les moyens de fixation de tuyau (10) comportant à leur extrémité inférieure un élément en forme de bride (12) correspondant à la forme des rainures (4) et qui peut être poussé dans les rainures (4) de sorte que les moyens de fixation de tuyau (10) puissent être déplacés dans les rainures (4) vers les endroits souhaités en vue de l'installation des tuyaux chauffants (20) dans les encoches d'installation (14), et en ce que les moyens de fixation de tuyau (10) ont une forme permettant la rotation de ceux-ci suite à leur mise en place dans les rainures (4).

2. Elément chauffant suivant la revendication 1, caractérisé en ce que les rainures (4) formées dans la plaque isolante (1) ont une forme en queue d'aronde.

3. Elément chauffant suivant l'une quelconque des revendications précédentes, caractérisé en ce que des encoches d'installation en croix (14) sont formées à l'extrémité supérieure (13) des moyens de fixation de tuyau (10).

4. Elément chauffant suivant l'une quelconque des revendications précédentes, caractérisé en ce que les encoches d'installation (14) sont formées pour au moins deux dimensions de tuyau.
